# EUROPÄISCHE PATENTSCHRIFT

(11) **EP 3 386 154 B1**
(45) Veröffentlichungstag und Bekanntmachung des Hinweises auf die Patenterteilung: **07.08.2019**
(21) Anmeldenummer: 18163297.7
(22) Anmeldetag: 22.03.2018
(51) Int. Cl.: H04L 12/28, H04L 12/24, H04L 29/06, H04W 12/08

(54) **VERFAHREN ZUM VERBINDEN EINES HAUSHALTSGERÄTES MIT EINEM DRAHTLOSEN HEIMNETZWERK**
METHOD FOR CONNECTING A HOUSEHOLD APPLIANCE TO A WIRELESS HOME NETWORK
PROCEDE DE CONNEXION D'UN APPAREIL ELECTROMENAGER A UN RESEAU DOMESTIQUE SANS FIL

(30) Priorität: 03.04.2017 DE 102017107088
(43) Veröffentlichungstag der Anmeldung: 10.10.2018
(73) Patentinhaber: Vorwerk & Co. Interholding GmbH, 42275 Wuppertal (DE)
(72) Erfinder: Hillen, Lorenz, 42287 Wuppertal (DE)
(74) Vertreter: Müller, Enno

(56) Entgegenhaltungen:
- WO-A1-2015/043649
- US-A1- 2006 208 088
- US-A1- 2015 097 689

## Beschreibung

### Gebiet der Technik

Die Erfindung betrifft ein Verfahren zum Verbinden eines Haushaltsgerätes mit einem drahtlosen Heimnetzwerk, wobei das Haushaltsgerät ein temporäres Netzwerk mit einer Hotspot-Identifikation zur Verfügung stellt, wobei ein Nutzerendgerät unter Nutzung der Hotspot-Identifikation über das temporäre Netzwerk mit dem Haushaltsgerät verbunden wird, wobei das Nutzerendgerät Netzwerkzugangsinformationen an das Haushaltsgerät übermittelt, und wobei das Haushaltsgerät nach Empfang der Netzwerkzugangsinformationen das temporäre Netzwerk schließt und sich unter Nutzung der empfangenen Netzwerkzugangsinformationen an dem Heimnetzwerk anmeldet.

Darüber hinaus betrifft die Erfindung ein Haushaltsgerät mit einer Hotspot-Einrichtung zum Bereitstellen eines temporären Netzwerkes, einer Einrichtung zum Bereitstellen einer Hotspot-Identifikation für einen Zugang zu dem temporären Netzwerk und einem Funkmodul zur Kommunikation mit einem Access Point eines drahtlosen Heimnetzwerkes unter Nutzung von über das temporäre Netzwerk empfangenen Netzwerkzugangsinformationen für das Heimnetzwerk.

### Stand der Technik

Verfahren und Haushaltsgeräte der vorgenannten Art sind im Stand der Technik bekannt.

Die Patentschrift EP 1309127 B1 offenbart beispielsweise ein Verfahren zum Verbinden eines Gerätes mit einem existierenden drahtlosen Netzwerk, mit welchem mehrere Kommunikationsvorrichtungen verbunden sind. Die Kommunikationsvorrichtungen besitzen dieselbe Identifikation zur Kommunikation. Das neu mit dem Netzwerk zu verbindende Gerät weist einen Speicher auf, in welchem eine Vermittlungsidentifikation für ein zeitweiliges drahtloses Netzwerk im Voraus gespeichert ist. Auf der Grundlage dieser Vermittlungsidentifikation errichtet das Gerät ein zeitweiliges drahtloses Netzwerk, mit welchem sich eine Kommunikationsvorrichtung, die bereits Teilnehmer des existierenden drahtlosen Netzwerkes ist, verbinden kann, um dem neu zu verbindenden Gerät eine Netzwerkzugangsinformation für das existierende drahtlose Netzwerk zu übermitteln. Das zu verbindende Gerät speichert die Netzwerkzugangsinformation, schließt das zeitweilige drahtlose Netzwerk und verbindet sich unter Nutzung der erhaltenen Netzwerkzugangsinformation mit dem existierenden drahtlosen Netzwerk.

Das Dokument US 2015/0097689 A1 offenbart des Weiteren, dass eine Hotspot-Identifikation für den Zugang zu dem temporären Netzwerk des zu verbindenden Gerätes als Etikett auf das zu verbindende Gerät aufgebracht ist.

Die Veröffentlichungsschrift US 2006/0208088 A1 offenbart ein Kommunikationssystem mit einem permanenten Access Point eines Netzwerkes, mit welchem sich ein Gerät, dort eine Digitalkamera, verbinden kann. Der Access Point weist einen Generator zum Generieren einer Konfigurationsinformation auf, welche in einen QR-Code umgewandelt wird. Der QR-Code wird auf einem Display des Access Points selbst angezeigt.

### Zusammenfassung der Erfindung

Ausgehend von dem vorgenannten Stand der Technik ist es Aufgabe der Erfindung, ein alternatives Verfahren zum Verbinden eines Haushaltsgerätes mit einem drahtlosen Heimnetzwerk zu schaffen, bei welchem die Hotspot-Identifikation nicht im Voraus innerhalb des Haushaltsgerätes gespeichert sein muss.

Zur Lösung der vorgenannten Aufgabe wird mit der Erfindung vorgeschlagen, dass die Hotspot-Identifikation des temporären Netzwerkes zufällig mittels eines Zufallszeichengenerators generiert wird und als optischer Code auf einem Display des Haushaltsgerätes ausgegeben wird, wobei der Zufallszeichengenerator die Hotspot-Identifikation zeitlich unmittelbar vor dem Aufbau des temporären Netzwerkes oder im Moment des Aufbaus des temporären Netzwerkes generiert.

Entgegen dem Stand der Technik ist die Hotspot-Identifikation für das temporäre Netzwerk nun nicht mehr in einem Speicher des Haushaltsgerätes, oder in einem Label auf einem Gehäuse des Haushaltsgerätes, hinterlegt, sondern wird bei Bedarf aktuell und individuell generiert. Somit wird für jeden Fall der Errichtung eines temporären Netzwerkes eine andere Hotspot-Identifikation generiert, welche zur Verbindung eines Nutzerendgerätes mit dem temporären Netzwerk des Haushaltsgerätes dient. Dadurch ist es einerseits möglich, die verwendete Hotspot-Identifikation einem bestimmten Ausgabezeitpunkt zuzuordnen und andererseits auch, die Zugangsberechtigung zu dem temporären Netzwerk zu beschränken. Darüber hinaus ist die Hotspot-Identifikation nur während bzw. kurz vor dem Errichten des temporären Netzwerks verfügbar und befindet sich nicht, wie beispielsweise im Stand der Technik üblich, für jedermann sichtbar auf entweder dem Haushaltsgerät selbst oder in einer technischen Anleitung des Haushaltsgerätes. Dies schützt nicht zuletzt auch vor einem unbefugten Zugriff auf das temporäre Netzwerk des Haushaltsgerätes. Der Zufallszeichengenerator erzeugt eine Folge von Zufallszeichen, welche aus einem bestimmten Bereich entnommen werden. Grundsätzlich können zwei unterschiedliche Arten von Zufallszeichengeneratoren unterschieden werden, nämlich einerseits die deterministischen Zufallszeichengeneratoren und die nicht-deterministischen Zufallszeichengeneratoren. Nicht-deterministisch ist ein Zufallszeichengenerator, welcher bei gleichen Ausgangsbedingungen unterschiedliche Zufallszeichen generiert. Zu diesem Zweck wird die Generierung des Zufallszeichens beispielsweise von einem äußeren, nicht-deterministischen Parameter abhängig gemacht, beispielsweise von Impulsschwankungen einer elektronischen Schaltung des Haushaltsgerätes oder dergleichen. Ein deterministischer Zufallszeichengenerator liefert hingegen bei gleichen Ausgangsbedingungen eine immer gleiche Abfolge von Zeichen, die aus einer definierten Menge ausgewählt sind. Beide Arten von Zufallszeichengeneratoren können bei dem erfindungsgemäßen Verfahren Einsatz finden. Der Zufallszeichengenerator generiert die Hotspot-Identifikation zeitlich unmittelbar vor dem Aufbau des temporären Netzwerkes oder im Moment des Aufbaus des temporären Netzwerkes. Die Hotspot-Identifikation wird somit genau in dem Moment generiert, in welchem das temporäre Netzwerk aufgebaut werden soll oder aufgebaut wird. Sobald das Haushaltsgerät ein temporäres Netzwerk zur Verfügung stellt, ist auch die Hotspot-Identifikation verfügbar, die ein Nutzerendgerät benötigt, um die Netzwerkzugangsinformationen an das Haushaltsgerät zu übermitteln. Eine Speicherung der Hotspot-Identifikation im Voraus ist somit nicht erforderlich. Die Hotspot-Identifikation ist vielmehr erst in dem Moment existent, in welchem sie auch benötigt wird. Ein mehrmaliges Aussenden derselben Hotspot-Identifikation während des Bestehens des temporären Netzwerkes ist möglich. Alternativ ist es möglich, dass in bestimmten zeitlichen Abständen jeweils eine neue Hotspot-Identifikation generiert wird. Insbesondere im zuletzt genannten Fall ist auch nach Aufbau des temporären Netzwerkes keine Speicherung der Hotspot-Identifikation erforderlich.

Insbesondere wird vorgeschlagen, dass die Hotspot-Identifikation als eine Folge von zufällig gewählten Ziffern und/oder Buchstaben und/oder Sonderzeichen generiert wird. Die Hotspot-Identifikation weist somit eine Mehrzahl von Zeichen auf, welche Ziffern, Buchstaben und/oder Sonderzeichen sein können. Besonders vorteilhaft ist eine Zahlen-Buchstaben-Kombination gewählt. Die Anzahl der Zeichen der Hotspot-Identifikation ist grundsätzlich nicht beschränkt. Die Hotspot-Identifikation kann somit aus zumindest einem Zeichen bis hin zu einer Folge aus zehn, zwanzig oder noch mehr Zeichen gewählt sein. Dabei steigt die Sicherheit der Hotspot-Identifikation mit zunehmender Zeichenanzahl.

Gemäß einer Ausführungsform kann vorgesehen sein, dass die Hotspot-Identifikation als optischer Code ausgegeben wird. Insbesondere kann die Hotspot-Identifikation als ein zweidimensionaler Code auf einem Display des Haushaltsgerätes angezeigt werden. Besonders bevorzugt ist der zweidimensionale Code ein QR-Code® (Quick Response Code). Vorteilhaft weist der optische Code ein Muster auf, beispielsweise ein Schwarzweiß-Muster, in welchem die Hotspot-Identifikation codiert vorliegt. Ein solcher optischer Code kann beispielsweise auch ein Barcode sein, ein QR-Code oder ein anderer musterartiger Code. Zum Erstellen des optischen Codes weist das Haushaltsgerät eine Recheneinrichtung auf, beispielsweise einen QR-Code-Generator, welcher eine aus mehreren Zeichen bestehende Hotspot-Identifikation in einen optischen Code transformieren kann.

Es wird vorgeschlagen, dass der optische Code mittels eines Bildsensors des Nutzerendgerätes empfangen wird. Der Bildsensor des Nutzerendgerätes kann beispielsweise eine Kamera oder zumindest ein Kamerachip sein. In dem Fall, dass es sich bei dem Nutzerendgerät beispielsweise um ein Mobiltelefon, einen Tablet-Computer oder ein Laptop des Nutzers handelt, verfügt dieses Nutzerendgerät üblicherweise ohnehin über einen Bildsensor.

Insbesondere wird in diesem Zusammenhang vorgeschlagen, dass der optische Code mittels einer auf dem Nutzerendgerät installierten Applikation verarbeitet und die Hotspot-Identifikation aus dem optischen Code gelesen wird. Der von dem Bildsensor des Nutzerendgerätes empfangene optische Code wird mittels der auf dem Nutzerendgerät installierten Applikation derart weiterverarbeitet, dass die Hotspot-Identifikation in einer Form zur Verfügung steht, die dem Nutzerendgerät eine Verbindung mit dem temporären Netzwerk des Haushaltsgerätes ermöglicht.

Des Weiteren wird vorgeschlagen, dass die Hotspot-Identifikation spätestens zum Zeitpunkt der Beendigung des temporären Netzwerkes ungültig wird. Gemäß dieser Ausführung ist die Verwendbarkeit der von dem Zufallszeichengenerator ausgegebenen Hotspot-Identifikation zeitlich beschränkt. Beispielsweise kann die Gültigkeit der Hotspot-Identifikation auf wenige Minuten nach der Ausgabe beschränkt sein. Eine nach Ende ihrer Gültigkeit an das Haushaltsgerät übermittelte Hotspot-Identifikation wird ignoriert, so dass ein Zugriff auf das temporäre Netzwerk bzw. eine Übermittlung von Netzwerkzugangsinformationen an das Haushaltsgerät nicht mehr möglich ist, selbst dann, wenn erneut ein temporäres Netzwerk eröffnet wird.

Neben dem zuvor beschriebenen Verfahren zum Verbinden eines Haushaltsgerätes mit einem drahtlosen Heimnetzwerk wird mit der Erfindung des Weiteren auch ein Haushaltsgerät mit einer Hotspot-Einrichtung zum Bereitstellen und Schließen eines temporären Netzwerkes, einer Einrichtung zum Bereitstellen einer Hotspot-Identifikation für einen Zugang zu dem temporären Netzwerk und einem Funkmodul zur Kommunikation mit einem Access Point eines drahtlosen Heimnetzwerkes unter Nutzung von über das temporäre Netzwerk empfangenen Netzwerkzugangsinformationen für das Heimnetzwerk vorgeschlagen, wobei die Einrichtung zum Bereitstellen der Hotspot-Identifikation einen Zufallszeichengenerator aufweist, welcher eingerichtet ist, die Hotspot-Identifikation aus zufällig gewählten Ziffern und/ oder Buchstaben und/oder Sonderzeichen zu generieren, wobei das Haushaltsgerät ein Display zur Anzeige eines die Hotspot-Identifikation enthaltenden zweidimensionalen optischen Codes aufweist, und wobei der Zufallszeichengenerator eingerichtet ist, die Hotspot-Identifikation zeitlich unmittelbar vor dem Aufbau des temporären Netzwerkes oder im Moment des Aufbaus des temporären Netzwerkes zu generieren. Das Haushaltsgerät ist somit erfindungsgemäß ausgebildet, ein Verfahren der zuvor beschriebenen Art auszuführen, um ein Haushaltsgerät, welches selber nicht über eine Benutzerschnittstelle zur manuellen Eingabe von Netzwerkzugangsinformationen verfügt, mit Netzwerkzugangsinformationen zu versorgen. Die Hotspot-Einrichtung zum Bereitstellen eines temporären Netzwerkes ist vorzugsweise ein Netzwerkmodul, beispielsweise ein WLAN-Modul, welches die Funktion eines Access Points übernehmen kann. Die Einrichtung zum Bereitstellen der Hotspot-Identifikation weist erfindungsgemäß einen Zufallszeichengenerator auf, welcher die Hotspot-Identifikation zufällig generiert. Die damit verbundenen Vorteile und Merkmale ergeben sich wie zuvor in Bezug auf das erfindungsgemäße Verfahren beschrieben.

Des Weiteren wird vorgeschlagen, dass das Haushaltsgerät ein Display zur Anzeige eines die Hotspot-Identifikation enthaltenden zweidimensionalen optischen Codes aufweist. Der zweidimensionale optische Code kann insbesondere ein QR-Code sein.

Das Haushaltsgerät kann ein Bodenbearbeitungsgerät, beispielsweise ein Reinigungsgerät, sein. Das Haushaltsgerät kann entweder als nutzergeführtes Haushaltsgerät oder als sich selbsttätig fortbewegendes Haushaltsgerät, insbesondere als Roboter, ausgebildet sein. Des Weiteren ist die Erfindung auch auf andere Haushaltsgeräte anwendbar, beispielsweise Poliergeräte, Schleifgeräte, Überbodenreinigungsgeräte, Mähgeräte, Küchengeräte, sonstige Servicegeräte, Unterhaltungsgeräte oder dergleichen.

### Kurze Beschreibung der Zeichnungen

Im Folgenden wird die Erfindung anhand von Ausführungsbeispielen näher erläutert. Es zeigen:
- Fig. 1: ein Haushaltsgerät und ein Heimnetzwerk mit einem Access Point und einem Nutzerendgerät,
- Fig. 2: Übermittlung von Hotspot-Identifikation und Netzwerkzugangsinformation über ein temporäres Netzwerk des Haushaltsgerätes,
- Fig. 3: Verbinden des Haushaltsgerätes mit dem Heimnetzwerk,
- Fig. 4: das Heimnetzwerk mit Haushaltsgerät, Access Point und Nutzerendgerät.

### Beschreibung der Ausführungsformen

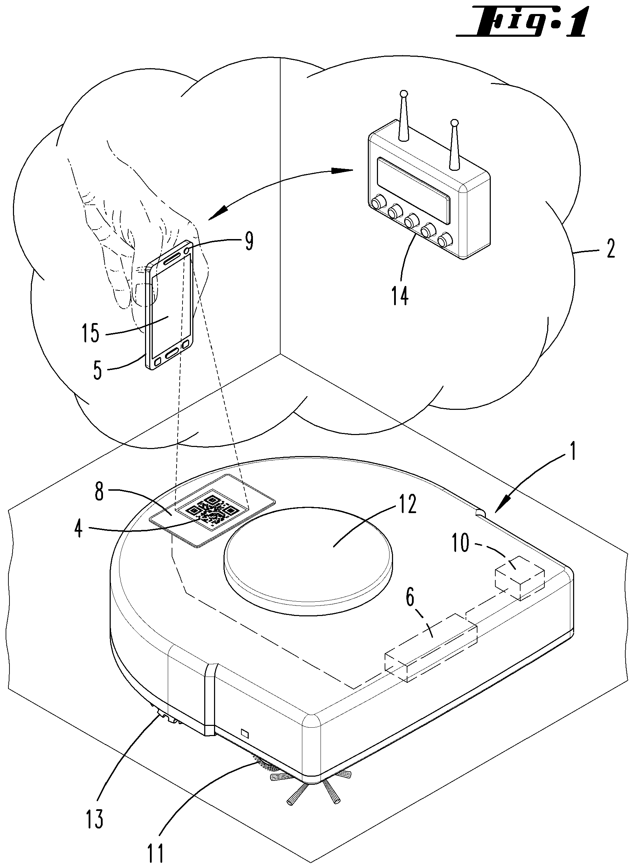

Figur 1 zeigt ein Heimnetzwerk 2, hier beispielsweise ein übliches WiFi-Netzwerk, mit einem Access Point 14 und einem Nutzerendgerät 5. Des Weiteren zeigt die Figur 1 ein Haushaltsgerät 1, welches jedoch noch kein Teilnehmer des Heimnetzwerkes 2 ist. Das Haushaltsgerät 1, das Nutzerendgerät 5 und der Access Point 14 weisen WiFi-Funkmodule zur Kommunikation auf. Das Haushaltsgerät 1 ist hier ein sich selbsttätig verfahrbares Reinigungsgerät, nämlich ein Saugroboter. Das Nutzerendgerät 5 ist ein Smartphone.

Das Haushaltsgerät 1 weist eine nicht weiter dargestellte Navigations- und Selbstlokalisierungseinrichtung auf, mittels welcher sich das Haushaltsgerät 1 innerhalb einer Umgebung orientieren und fortbewegen kann. Die Navigations- und Selbstlokalisierungseinrichtung wertet Messdaten einer Abstandsmesseinrichtung 12 auf, welche hier beispielsweise ein Rundum-Laserscanner nach der Art eines Lasertriangulationsmesssystems ist. Mittels der Abstandsmesseinrichtung 12 werden Abstände zu Hindernissen und Raumbegrenzungen gemessen. Diese Messdaten werden vorzugsweise mit Messdaten eines Odometriesensors verglichen, welcher eine von dem Haushaltsgerät 1 zurückgelegte Strecke erfasst. Die Information über Hindernisse und Raumbegrenzungen der Umgebung werden zu einer Umgebungskarte des Haushaltsgerätes 1 weiterverarbeitet, mit deren Hilfe sich das Haushaltsgerät 1 in der Umgebung orientieren kann. Des Weiteren weist das Haushaltsgerät 1 ein Reinigungselement 11 zur Bearbeitung einer zu reinigenden Fläche auf. Das Reinigungselement 11 ist hier beispielsweise eine elektromotorisch angetriebene Borstenwalze. Das Haushaltsgerät 1 verfügt über Räder 13, welche motorisch angetrieben sind und der Fortbewegung des Haushaltsgerätes 1 innerhalb der Umgebung dienen. Auf einer Oberseite des Haushaltsgerätes 1 ist des Weiteren ein Display 8 angeordnet, auf welchem verschiedene Informationen angezeigt werden können.

Das Nutzerendgerät 5 weist ein Display 15 und einen Bildsensor 9, nämlich eine Kamera, auf. Das Display 15 ist vorzugsweise ein Touchscreen, welches zur Darstellung verschiedener Informationen und Tastenbereiche dient. Die Tastenbereiche können durch Druck betätigt werden. Auf dem Nutzerendgerät 5 ist eine Applikation zur Kommunikation und Zusammenarbeit mit dem Haushaltsgerät 1 installiert.

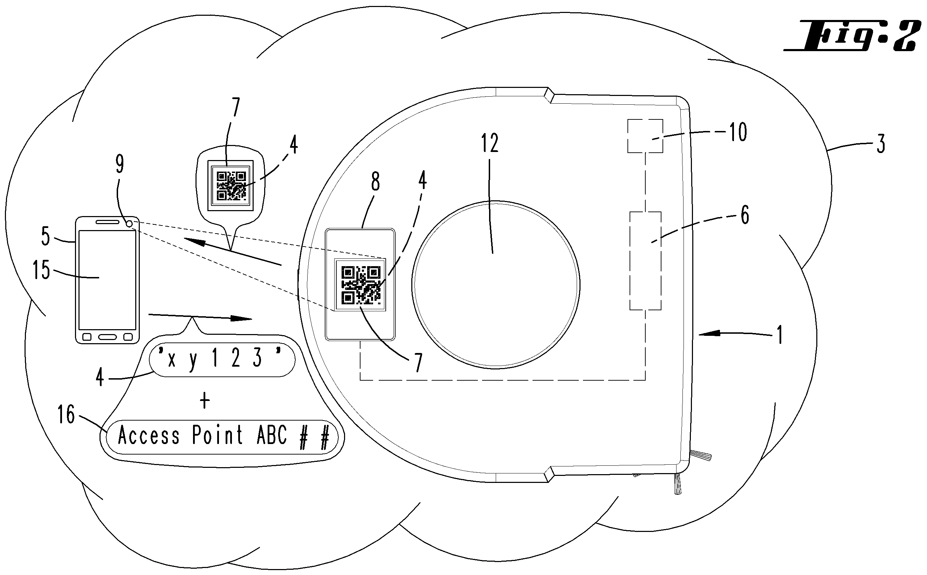

Die in Figur 1 dargestellte Situation zeigt einen Zeitpunkt, zu welchem das Haushaltsgerät 1 noch nicht Teilnehmer des Heimnetzwerkes 2 ist. Um Teilnehmer des Heimnetzwerkes 2 zu werden, benötigt das Haushaltsgerät 1 eine Netzwerkzugangsinformation 16 für den Access Point 14. Um diese zu erhalten, öffnet das Haushaltsgerät 1 ein temporäres Netzwerk 3, mit welchem sich das Nutzerendgerät 5 verbinden kann. Diese Situation ist in Figur 2 dargestellt.

Figur 2 zeigt das temporäre Netzwerk 3 des Haushaltsgerätes 1 mit einem Nutzerendgerät 5. Eine Hotspot-Einrichtung 10 des Haushaltsgerätes 1, beispielsweise ein Netzwerkmodul mit einer Access Point-Funktion, eröffnet das temporäre Netzwerk 3 mit einer Hotspot-Identifikation 4, welche mittels eines Zufallszeichengenerators 6 generiert wird. Diese Hotspot-Identifikation 4 gilt als SSID des temporären Netzwerkes 3. Der Zufallszeichengenerator 6 generiert die Hotspot-Identifikation 4 aus zufällig ausgewählten Zeichen, welche hier beispielsweise eine zufällige Folge von Buchstaben und Zahlen bilden, nämlich hier beispielsweise die Hotspot-Identifikation 4 "XY123". Eine Recheneinrichtung des Haushaltsgerätes 1 transformiert die Hotspot-Identifikation 4 anschließend in einen optischen Code 7, hier einen QR-Code, der in codierter Form die Hotspot-Identifikation 4 enthält. Der optische Code 7 wird auf dem Display 8 des Haushaltsgerätes 1 angezeigt. Zur Verbindung des Nutzerendgerätes 5 mit dem temporären Netzwerk 3 für ein so in die Nähe des Haushaltsgerätes 1, dass der Bildsensor 9 des Nutzerendgerätes 5 auf das Display 8 des Haushaltsgerätes 1 schaut und der optische Code 7 im Erfassungsbereich des Bildsehsörs 9 liegt. Die auf dem Nutzerendgerät 5 installierte Applikation ist geöffnet und steuert den Bildsensor 9. Der Bildsensor 9 detektiert daraufhin den optischen Code 7 und leitet diesen an eine Recheneinrichtung des Nutzerendgerätes 5 weiter, welche die Hotspot-Identifikation 4 aus dem optischen Code 7 extrahiert. Mittels dieser Hotspot-Identifikation 4 kann sich das Nutzerendgerät 5 nun an dem temporären Netzwerk 3 des Haushaltsgerätes 1 anmelden. Über das temporäre Netzwerk 3 übermittelt das Nutzerendgerät 5 anschließend eine Netzwerkzugangsinformation 16 an das Haushaltsgerät 1. Die Übertragung der Hotspot-Information 4 und der Netzwerkzugangsinformation 16 erfolgt mittels der WiFi-Funkmodule des Nutzerendgerätes 5 und des Haushaltsgerätes 1. Die Netzwerkzugangsinformation 16 ist hier beispielsweise die Zeichenfolge "Access Point ABC##". Diese dient zur Anmeldung des Haushaltsgerätes 1 an dem Heimnetzwerk 2.

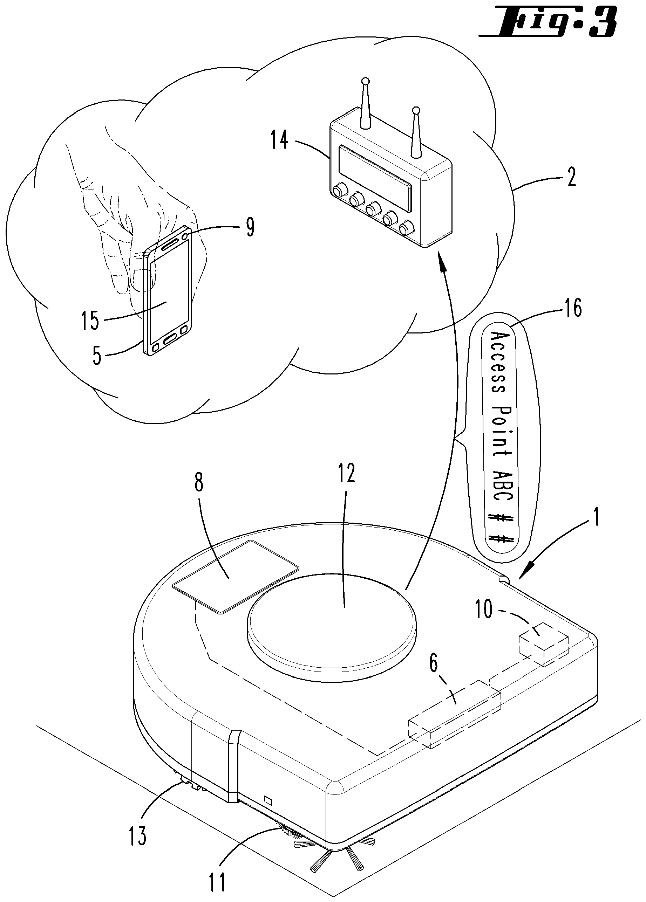

Nachdem die in Figur 2 dargestellte Übertragung über das temporäre Netzwerk 3 des Haushaltsgerätes 1 abgeschlossen ist, schließt die Hotspot-Einrichtung 10 das temporäre Netzwerk 3. Daraufhin meldet sich das Haushaltsgerät 1 wie in Figur 3 dargestellt an dem Heimnetzwerk 2 an. Im Einzelnen übermittelt das Haushaltsgerät 1 dazu die zuvor erhaltene Netzwerkzugangsinformation 16 "Access Point ABC##" an den Access Point 14 des Heimnetzwerkes 2. Der Access Point 14 überprüft, ob die Netzwerkzugangsinformation 16 korrekt ist und nimmt das Haushaltsgerät 1 bei Übereinstimmung als Teilnehmer in das Heimnetzwerk 2 auf.

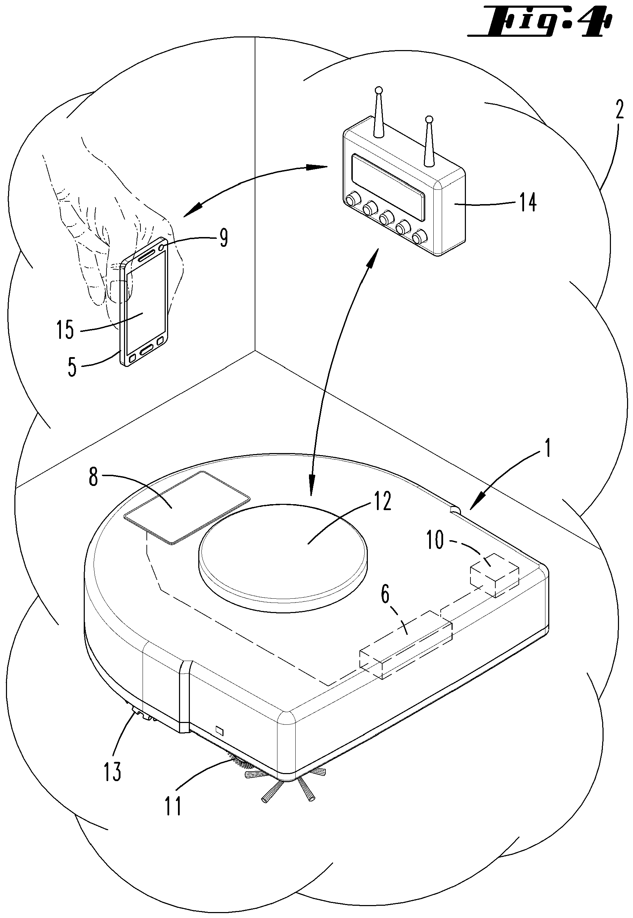

Figur 4 zeigt das Heimnetzwerk 2 nach der Aufnahme des Haushaltsgerätes 1 als Teilnehmer. In diesem Heimnetzwerk 2 kommunizieren sowohl der Access Point 14 und das Nutzerendgerät 5 miteinander, als auch der Access Point 14 und das Haushaltsgerät 1.

### Liste der Bezugszeichen

- 1: Haushaltsgerät
- 2: Heimnetzwerk
- 3: Temporäres Netzwerk
- 4: Hotspot-Identifikation
- 5: Nutzerendgerät
- 6: Zufallszeichengenerator
- 7: Optischer Code
- 8: Display
- 9: Bildsensor
- 10: Hotspot-Einrichtung
- 11: Reinigungselement
- 12: Abstandsmesseinrichtung
- 13: Rad
- 14: Access Point
- 15: Display
- 16: Netzwerkzugangsinformation

## Patentansprüche

1. Verfahren zum Verbinden eines Haushaltsgerätes (1) mit einem drahtlosen Heimnetzwerk (2), wobei das Haushaltsgerät (1) ein temporäres Netzwerk (3) mit einer Hotspot-Identifikation (4) zur Verfügung stellt, wobei ein Nutzerendgerät (5) unter Nutzung der Hotspot-Identifikation (4) über das temporäre Netzwerk (3) mit dem Haushaltsgerät (1) verbunden wird, wobei das Nutzerendgerät (5) Netzwerkzugangsinformationen (16) an das Haushaltsgerät (1) übermittelt, und wobei das Haushaltsgerät (1) nach Empfang der Netzwerkzugangsinformationen (16) das temporäre Netzwerk (3) schließt und sich unter Nutzung der empfangenen Netzwerkzugangsinformationen (16) an dem Heimnetzwerk (2) anmeldet, **dadurch gekennzeichnet, dass** die Hotspot-Identifikation (4) des temporären Netzwerkes (3) zufällig mittels eines Zufallszeichengenerators (6) generiert wird und als optischer Code (7) auf einem Display (8) des Haushaltsgerätes (1) ausgegeben wird, wobei der Zufallszeichengenerator (6) die Hotspot-Identifikation (4) zeitlich unmittelbar vor dem Aufbau des temporären Netzwerkes (3) oder im Moment des Aufbaus des temporären Netzwerkes (3) generiert.

2. Verfahren nach Anspruch 1, **dadurch gekennzeichnet, dass** die Hotspot-Identifikation (4) als eine Folge von zufällig gewählten Ziffern und/oder Buchstaben und/oder Sonderzeichen generiert wird.

3. Verfahren nach einem der vorhergehenden Ansprüche, **dadurch gekennzeichnet, dass** die Hotspot-Identifikation (4) als zweidimensionaler Code auf dem Display (8) des Haushaltsgerätes (1) angezeigt wird, besonders bevorzugt als ein QR-Code® (Quick Response Code).

4. Verfahren nach Anspruch 3, **dadurch gekennzeichnet, dass** der optische Code (7) mittels eines Bildsensors (9) des Nutzerendgerätes (5) empfangen wird.

5. Verfahren nach Anspruch 3 oder 4, **dadurch gekennzeichnet, dass** der optische Code (7) mittels einer auf dem Nutzerendgerät (5) installierten Applikation verarbeitet und die Hotspot-Identifikation (4) aus dem optischen Code (7) gelesen wird.

6. Verfahren nach einem der vorhergehenden Ansprüche, **dadurch gekennzeichnet, dass** die Hotspot-Identifikation (4) spätestens zum Zeitpunkt der Beendigung des temporären Netzwerkes (3) ungültig wird.

7. Haushaltsgerät (1) mit einer Hotspot-Einrichtung (10) zum Bereitstellen eines temporären Netzwerkes (3), einer Einrichtung zum Bereitstellen einer Hotspot-Identifikation (4) für einen Zugang zu dem temporären Netzwerk (3) und einem Funkmodul zur Kommunikation mit einem Access Point (14) eines drahtlosen Heimnetzwerkes (2) unter Nutzung von über das temporäre Netzwerk (3) empfangenen Netzwerkzugangsinformationen für das Heimnetzwerk (2), **dadurch gekennzeichnet, dass** die Einrichtung zum Bereitstellen der Hotspot-Identifikation (4) einen Zufallszeichengenerator (6) aufweist, welcher eingerichtet ist, die Hotspot-Identifikation (4) aus zufällig gewählten Ziffern und/oder Buchstaben und/oder Sonderzeichen zu generieren, wobei das Haushaltsgerät (1) ein Display (8) zur Anzeige eines die Hotspot-Identifikation (4) enthaltenden zweidimensionalen optischen Codes aufweist, und wobei der Zufallszeichengenerator (6) eingerichtet ist, die Hotspot-Identifikation (4) zeitlich unmittelbar vor dem Aufbau des temporären Netzwerkes (3) oder im Moment des Aufbaus des temporären Netzwerkes (3) zu generieren.

8. Haushaltsgerät (1) nach Anspruch 7, **dadurch gekennzeichnet, dass** der zweidimensionale optische Code (7) ein QR-Code® (Quick Response Code) ist.

## Claims

1. A method for connecting a household appliance (1) to a wireless home network (2), wherein the household appliance (1) makes available a temporary network (3) with a hotspot identification (4), wherein a user terminal (5) is connected to the household appliance (1) via the temporary network (3) by utilizing the hotspot identification (4), wherein the user terminal (5) transmits network access information (16) to the household appliance (1), and wherein the household appliance (1) closes the temporary network (3) after the reception of the network access information (16) and logs on to the home network (2) by utilizing the received network access information (16), **characterized in that** the hotspot identification (4) of the temporary network (3) is randomly generated by means of a random character generator (6) and output in the form of an optical code (7) on the screen (8) of the household appliance (1), wherein the random character generator (6) generates the hotspot identification (4) immediately before the temporary network (3) is established or at the moment the temporary network (3) is established.

2. The method according to claim 1, **characterized in that** the hotspot identification (4) is generated in the form of a sequence of randomly selected numerals and/or letters and/or special characters.

3. The method according to one of the preceding claims, **characterized in that** hotspot identification (4) is displayed on a screen (8) of the household appliance (1) in the form of a two-dimensional code, particularly a QR® code (Quick Response code).

4. The method according to claim 3, **characterized in that** the optical code (7) is received by means of an image sensor (9) of the user terminal (5).

5. The method according to claim 3 or 4, **characterized in that** the optical code (7) is processed by means of an application installed on the user terminal (5) and the hotspot identification (4) is extracted from the optical code (7).

6. The method according to one of the preceding claims, **characterized in that** the hotspot identification (4) becomes invalid no later than at the time, at which the temporary network (3) is closed.

7. A household appliance (1) with a hotspot device (10) for making available a temporary network (3) and with a device for making available a hotspot identification (4) for accessing the temporary network (3) and a radio modul for communication with an access point (14) of a wireless home network (2) by using network access information for the home network (2) received by the temporary network (3), **characterized in that** the device for making available the hotspot identification (4) features a random character generator (6), which is designed for generating the hotspot identification (4) of randomly selected numerals and/or letters and/or special characters, wherein that the household appliance (1) features a screen (8) for displaying a two-dimensional optical code containing the hotspot identification (4) and wherein the random character generator (6) is designed such that it generates the hotspot identification (4) immediately before the temporary network (3) is established or at the moment the temporary network (3) is established.

8. The household appliance (1) according to claim 7, **characterized in that** the two-dimensional optical code (7) is a QR® code (Quick Response code).

## Revendications

1. Procédé pour connecter un appareil ménager (1) à un réseau domestique sans fil (2), dans lequel l'appareil ménager (1) met à disposition un réseau temporaire (3) avec une identification de point d'accès sans fil (4), dans lequel un terminal d'utilisateur (5) est relié à l'appareil ménager (1) via le réseau temporaire (3) en utilisant l'identification de point d'accès sans fil (4), dans lequel le terminal d'utilisateur (5) transmet des informations d'accès au réseau (16) à l'appareil ménager (1), et dans lequel l'appareil ménager (1) ferme le réseau temporaire (3) après réception des informations d'accès au réseau (16) et se connecte au réseau domestique (2) en utilisant les informations d'accès au réseau reçues (16), **caractérisé en ce que** l'identification de point d'accès sans fil (4) du réseau temporaire (3) est générée de manière aléatoire au moyen d'un générateur de caractères aléatoires (6) et est fournie sous la forme d'un code optique (7) sur un écran (8) de l'appareil ménager (1), le générateur de caractères aléatoires (6) générant l'identification de point d'accès sans fil (4) immédiatement avant l'établissement du réseau temporaire (3) ou au moment de l'établissement du réseau temporaire (3).

2. Procédé selon la revendication 1, **caractérisé en ce que** l'identification de point d'accès sans fil (4) est générée sous la forme d'une séquence de chiffres et/ou de lettres et/ou de caractères spéciaux sélectionnés de manière aléatoire.

3. Procédé selon l'une des revendications précédentes, **caractérisé en ce que** l'identification de point d'accès sans fil (4) est affichée sur l'écran (8) de l'appareil ménager (1) sous la forme d'un code bidimensionnel, en particulier de préférence sous la forme d'un QR-Code® (Quick Response Code).

4. Procédé selon la revendication 3, **caractérisé en ce que** le code optique (7) est reçu au moyen d'un capteur d'image (9) du terminal utilisateur (5).

5. Procédé selon la revendication 3 ou 4, **caractérisé en ce que** le code optique (7) est traité au moyen d'une application installée sur le terminal d'utilisateur (5) et l'identification du point d'accès sans fil (4) est extrait du code optique (7).

6. Procédé selon l'une des revendications précédentes, **caractérisé en ce que** l'identification de point d'accès sans fil (4) devient invalide au plus tard au moment où il est mis fin au réseau temporaire (3).

7. Appareil ménager (1), comprenant un dispositif de point d'accès sans fil (10) pour établir un réseau temporaire (3), un dispositif pour fournir une identification de point d'accès sans fil (4) pour accéder au réseau temporaire (3), et un module radio pour communiquer avec un point d'accès (14) d'un réseau domestique sans fil (2) en utilisant des informations d'accès au réseau domestique (2) reçues via le réseau temporaire (3), **caractérisé en ce que** le dispositif pour fournir l'identification de point d'accès sans fil (4) comporte un générateur de caractères aléatoires (6) qui est configuré pour générer l'identification de point d'accès sans fil (4) à partir de chiffres et/ou de lettres et/ou de caractères spéciaux sélectionnés de manière aléatoire, l'appareil ménager (1) ayant un écran (8) pour afficher un code optique bidimensionnel contenant l'identification de point d'accès sans fil (4), et le générateur de caractères aléatoires (6) étant configuré pour générer l'identification de point d'accès sans fil (4) immédiatement avant l'établissement du réseau temporaire (3) ou au moment de l'établissement du réseau temporaire (3).

8. Appareil ménager (1) selon la revendication 7, **caractérisé en ce que** le code optique bidimensionnel (7) est un QR-Code® (Quick Response Code).
